# FASCICULE DE BREVET EUROPEEN

(11) **EP 2 198 803 B1**
(45) Date de publication et mention de la délivrance du brevet: **29.02.2012**
(21) Numéro de dépôt: 09354051.6
(22) Date de dépôt: 19.11.2009
(51) Int. Cl.: A61C 13/00

(54) **Préforme en forme de grille en matériau composite pour une plaque base de prothèse et procédé de fabrication de la grille**
Formteil in Form eines Gitters aus Verbundwerkstoff für die Grundplatte einer Prothese und Verfahren zur Herstellung dieses Gitters
Preform in the form of a grid made of composite material for the base plate of a prosthesis and method of manufacturing the grid

(30) Priorité: 16.12.2008 FR 0807056
(43) Date de publication de la demande: 23.06.2010
(73) Titulaire: Clunet-Coste, Bruno, 38960 Saint-Etienne-de-Crossey (FR); Maneuf, Bernard, 38500 Voiron (FR); Collombin, André, 38500 Voiron (FR)
(72) Inventeur: Clunet-Coste, Bruno, 38960 Saint Etienne de Crossey (FR); Maneuf, Bernard, 38500 Voiron (FR); Collombin, André, 38500 Voiron (FR); Le Guay, Yannick, 38590 Sillans (FR)
(74) Mandataire: Hecké, Gérard

(56) Documents cités:
- WO-A-98/19621
- FR-A- 2 776 502
- JP-A- 2007 131 654

## Description

### Domaine technique de l'invention

L'invention est relative à un élément de renforcement préimprégné photo polymérisable constituée d'un matériau composite à base de fibres et de particules, et destiné à renforcer les plaques bases des prothèses dentaires amovibles.

### État de la technique

Le document US 2 755 552 décrit des renforts constitués de fibres pour renforcer des prothèses dentaires, des couronnes, des attelles de contention.

Le document US 2 793 436 se rapporte à un système pour renforcer des prothèses dentaires fixes ou amovibles, avec des fibres parallèles, croisées, ou toute autre texture de tissage, pouvant être incolore, transparente ou opalescente.

Le document FR 2 588 181 divulgue l'usage de fibres en matériaux composites pour renforcer des prothèses dentaires à base de résines totalement ou partiellement polymérisées, fabriquées en pultrusion, injection, compression, moulage, ou transfert.

Les renforts de prothèses connus sont généralement constitués de grilles métalliques, ou de plaques bases métalliques. La résine injectée pénètre dans les mailles de la grille métallique. L'inconvénient des grilles métalliques reste l'effet d'électrocorrosion pouvant se déclencher dans le temps.

Il est aussi connu de fabriquer en laboratoire des plaques bases de prothèses amovibles en résine dentaire, obtenues par injection, pressage ou aspiration. Le problème à résoudre est de bien intégrer le renfort dans la résine pour constituer un seul stratifié en composite. Dans les renforts préimprégnés connus, les fibres de renfort sont entièrement incluses dans la résine. Une fois polymérisés sur un modèle, ils constituent une structure pleine. Ils sont inclus en sandwich dans la résine de la prothèse, mais la résine ne peut pas pénétrer dans la structure dépourvue d'espaces libres. Le document US 6 010 337 divulgue une coque de support en matériau composite renforcé aux fibres, ladite coque étant constituée par formage sur un modèle d'une préforme photopolymérisable. La coque de support est rigide, et sa surface pleine ne permet pas d'injecter de la résine.

Dans un autre domaine technique, le document JP-A-2007131654 décrit une feuille transparente comprenant un tissu de fibres de verre textile muni de fils de trame et de fils de chaîne imprégnés d'une résine thermodurcissable dans laquelle sont ménagés des trous. Une telle feuille est destinée à former une structure d'isolation phonique placée à distance d'une vitre, afin de former une couche d'air entre une vitre en verre et ladite feuille.

### Objet de l'invention.

Un objet de l'invention a pour but de proposer une grille de renforcement de prothèse dentaire, solide formée après polymérisation, par un quadrillage de fils de chaîne et de fils de trame, l'espace central de la maille étant vide de fibres et de résine.

Selon l'invention, cet objet est atteint par les revendications annexées.

En particulier, cet objet est atteint par un procédé de formage d'une grille de renforcement de prothèse dentaire comportant les étapes suivantes consistant à :
- poser une préforme sur un modèle de laboratoire préalablement isolé par une première feuille isolante, ladite préforme étant constituée par un quadrillage de fils de trame et de fils de chaîne enrobés dans une résine d'imprégnation pour former une grille en l'état d'avant polymérisation,
- poser sur la grille une deuxième feuille isolante micronique,
- recouvrir la deuxième feuille isolante micronique au moyen d'une membrane thermoplastique, laquelle est chauffée et ramollie pour être appliquée par pression ou dépression sur la grille, le matériau thermoplastique de la membrane ayant flué dans les espaces entre les mailles,
- refroidir la membrane pour constituer une coque rigide de support de la grille,
- photopolymériser la grille dans la coque support,
- et détacher la grille de la coque pour être intégrée dans une plaque base d'une prothèse.Un tel procédé de formage conserve la configuration initiale du préimprégné, après formage.

La préforme est en forme de grille pour usage dentaire, préimprégnée et présentant une surface d'espaces libres entre les mailles d'au moins 25% de la surface du tissu sans fibres ni résine d'imprégnation. Les fils de trame croisent les fils de chaîne à intervalles réguliers, et ne peuvent pas glisser sur les fils de chaîne. Les fils de chaîne et de trame sont eux- mêmes constitués de fibres tissées. Les fils sont sélectivement enrobés de résine éventuellement dopée avec des particules en l'état d'avant polymérisation, et l'espace central de chaque maille ainsi constituée est vide de résine.

Le procédé a été formulé pour maintenir les espaces intermailles entre les fils de chaîne et les fils de trame, vides de fibres et de résine d'imprégnation. Le procédé empêche la résine d'imprégnation de fluer dans les espaces des mailles lors du formage sur le modèle de laboratoire dentaire, de manière à constituer une véritable grille après polymérisation.

Il a été établi qu'une membrane thermoplastique était capable, après ramollissement par la chaleur et placage sur une grille en l'état d'avant polymérisation selon l'invention, d'investir les espaces des mailles libres de fibres et de résine. La membrane thermoplastique peut être une membrane en acétate d'éthyle vinyle ou n'importe quel autre produit thermoplastique.

Après ramollissement et placage sur le modèle préalablement isolé, le matériau de la membrane investit les espaces libres de la grille et empêche la résine d'imprégnation de fluer dans les espaces libres de la grille. Après refroidissement, elle constitue une coque moulée sur le modèle de laboratoire dont la grille est maintenue provisoirement par la rétention que procure l'investissement des espaces libres entre les mailles de la grille par la membrane thermoplastique.

L'ensemble est ensuite porté dans une enceinte à photopolymérisation de laboratoire, et la grille selon l'invention est durcie dans sa coque de formage. La coque est ensuite retirée, fournissant une grille en matériau composite renforcé aux fibres et particules entièrement polymérisée, avec une forte proportion d'espaces libres au moins égale à 25 % de la surface de la grille, les espaces libres de fibres et de résine étant au moins égaux à la largeur des fils de trame et de chaîne.

Un tel procédé permet en outre l'injection, le pressage ou l'aspiration d'une résine dentaire, par exemple PMMA, constituant une base de prothèse mobile en acrylique, dans les espaces vides de fibres et de résine d'imprégnation constitués entre les fils de chaîne et les fils de trame, de manière à constituer un stratifié à renfort de fibres. La résine dentaire est intégrée dans la grille, constituant en fin de processus un seul stratifié composite.
La résine d'imprégnation des fils de chaîne et des fils de trame est avantageusement de même nature chimique que la résine constituant la base de prothèse, elle est liée chimiquement.

### Description sommaire des dessins

D'autres avantages et caractéristiques ressortiront plus clairement de la description qui va suivre d'un mode particulier de réalisation de l'invention donné à titre d'exemple non limitatif et représenté aux dessins annexés, dans lesquels :
- La figure 1 est une vue schématique en plan d'une grille selon l'invention.
- La figure 2 est une vue schématique d'une grille selon l'invention positionnée avant polymérisation sur un modèle de laboratoire.
- La figure 3 est une vue schématique d'une grille selon l'invention polymérisée dans sa coque de support.
- La figure 4 est une vue schématique d'une grille selon l'invention dans sa coque de formage thermoplastique après refroidissement avec les espaces entre les mailles libres de fibres et de résine investis par le matériau thermoplastique, et portée dans une enceinte de laboratoire à photo polymériser les résines.
- La figure 5 est une vue schématique du modèle de laboratoire sur lequel la grille polymérisée est repositionnée avec la membrane thermoplastique séparée, laissant libre de fibres et de résine les espaces entre les mailles.

### Description d'un mode préférentiel de l'invention

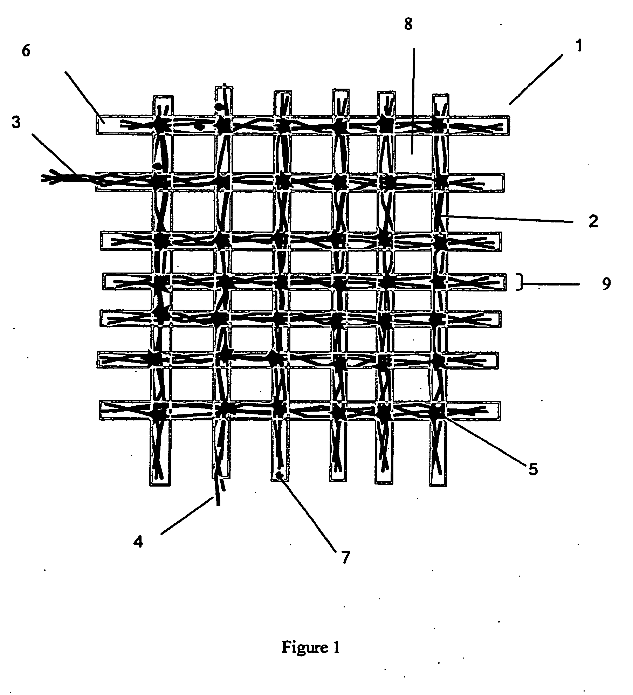

En référence à la figure 1, une préforme est constituée par un quadrillage de fils de trame 2 et de fils de chaîne 3, les deux étant constitués par des fibres tressées 4 pour former une grille 1. Les fils de trame 2 sont fixés aux fils de chaîne 3 aux noeuds 5 du quadrillage, de manière à limiter leur glissement qui est toujours inférieur à leur section propre.

Chaque fibre 4 est imprégnée par une résine d'imprégnation 6 éventuellement dopée avec des particules 7 de façon à lui conférer un état de gel avant polymérisation. L'espace 8 entre les mailles du quadrillage est vide de fibres et de résine, de manière à constituer la grille 1. L'espace 8 est supérieur à la section 9 des fils de trame 2 et de chaîne 3. La résine 6 peut être une résine méthacrylate pouvant se lier chimiquement à des fibres de verre après un traitement préalable de silanage.

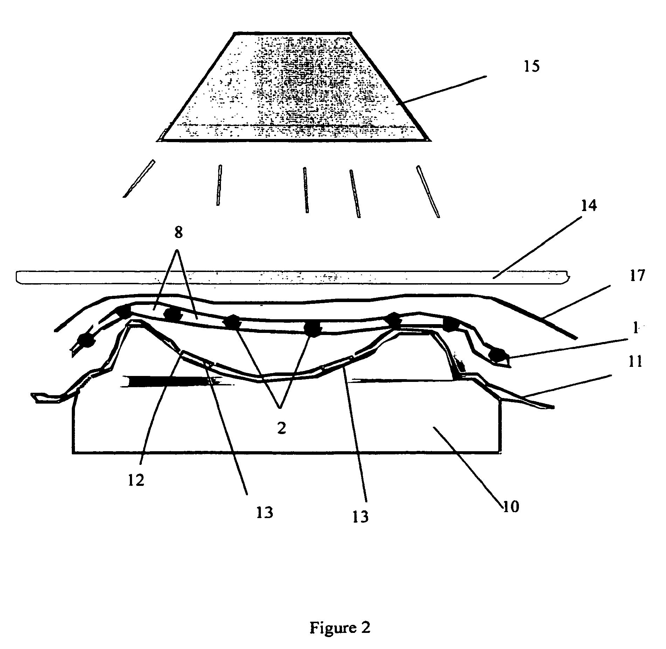

Sur la figure 2, un modèle de laboratoire 10 en plâtre est isolé avec une première feuille isolante 11, laquelle est ajourée en plusieurs endroits pour former des opercules 12, lesquels sont remplis de résine pour jouer le rôle de cales d'enfoncement 13. La feuille isolante 11 peut être une feuille de cellophane, et la préforme en forme de grille 1 de la figure 1 est positionnée sur la feuille 11.

Une deuxième feuille isolante 17 d'épaisseur micronique recouvre ensuite la grille 1. Une membrane 14 en matériau thermoplastique, notamment en acétate d'éthyle vinyle, est superposée sur la préparation, qui peut finalement être insolée avec des moyens de chauffage et de placage 15.

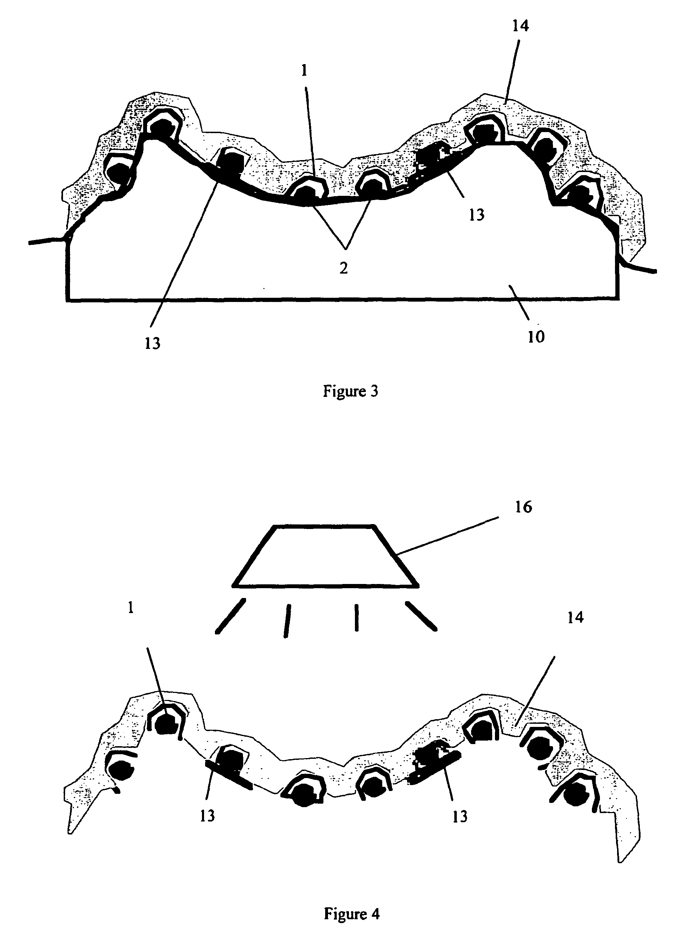

En référence à la figure 3, la membrane 14 thermoplastique préalablement chauffée, est appliquée après ramolissement sur la préparation, et la grille 1 est formée sur le modèle 10 isolé. Les espaces intermailles 8, vides de résine et de fibres, sont investis par le matériau thermoplastique de la membrane 14, empêchant la résine 6 de fluer. La membrane 14 sert ainsi de coque de formage pour appliquer la grille 1 sur un modèle. Les cales d'enfoncement 13 ménagent un espace entre la grille 1 et le modèle 10 après enlèvement de la première feuille isolante 11. Les cales 13 sont ainsi solidarisées à la grille 1.

En référence à la figure 4, la grille 1 reste logée dans sa coque thermoplastique durcie par refroidissement, puis est portée dans une enceinte de polymérisation 16 en lumière visible.

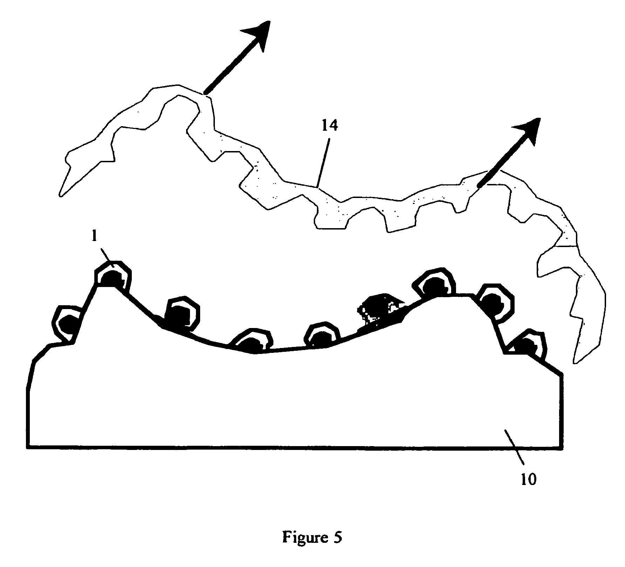

En référence à la figure 5, la membrane 14 thermoplastique de la coque de formage est retirée, et la grille 1 est positionnée sur le modèle.de laboratoire 10.

## Revendications

1. Préforme pour une plaque base de prothèse dentaire, ladite préforme étant en matériau composite constituée de résine, de particules et de fibres en l'état d'avant polymérisation, destinée à être formée sur un modèle de laboratoire (10) et comportant une grille (1) formée par un quadrillage de fils de trame (2) et de fils de chaîne (3) enrobés dans une résine d'imprégnation (6), l'espace (8) central entre les mailles étant exempt de fibres et de résine, et déterminant une surface d'espaces libres supérieure à 25 % de la surface totale de la grille, les fils de trame (2) étant fixés sur les fils de chaîne (3) aux noeuds du quadrillage, pour autoriser la manipulation de la préforme et son formage sur un modèle de laboratoire, sans fluage de la résine d'imprégnation (6) dans les espaces (8) des mailles, et une membrane (14) en matière thermoplastique ramollie après chauffage plaquée sur la grille (1) pour remplir les espaces (8) libres entre les mailles lors du formage sur le modèle de laboratoire (10).

2. Préforme selon la revendication 1, dans laquelle les fils de trame (2) sont maintenus par tricotage à égale distance les uns des autres sur les fils de chaîne (3), et leur glissement sur la chaîne après formage sur un modèle de laboratoire, est inférieur à leur section.

3. Préforme selon l'une des revendications 1 et 2, dans laquelle les fils de chaîne (3) sont maintenus par tricotage à égale distance les uns des autres sur les fils de trame (2), et leur glissement sur la trame après formage sur un modèle de laboratoire, est inférieur à leur section.

4. Préforme selon la revendication 1, dans laquelle les fils de trame (2) et les fils de chaîne (3) sont enrobés d'un gel de résine en l'état d'avant polymérisation, et les espaces (8) entre les mailles sont dépourvus de fibres et de résine.

5. Préforme selon l'une des revendications 1 à 4, dans laquelle chaque espace (8) libre est supérieur ou égal à la largeur propre des fils de trame (2) et de chaîne (3) après formage sur un modèle de laboratoire.

6. Procédé de formage d'une grille de renforcement de prothèse dentaire, comportant les étapes suivantes :
- poser une préforme sur un modèle de laboratoire préalablement isolé par une première feuille (11) isolante, ladite préforme étant constituée par un quadrillage de fils de trame (2) et de fils de chaîne (3) enrobés dans une résine d'imprégnation (6) pour former une grille en l'état d'avant polymérisation,
- poser sur la grille une deuxième feuille (17) isolante micronique,
- recouvrir la deuxième feuille (17) isolante micronique au moyen d'une membrane thermoplastique (14), laquelle est chauffée et ramollie pour être appliquée par pression ou dépression sur la grille, le matériau thermoplastique de la membrane ayant flué dans les espaces (8) entre les mailles,
- refroidir la membrane (14) pour constituer une coque rigide de support de la grille (1),
- photopolymériser la grille (1) dans la coque support,
- et détacher la grille (1) de la coque pour être intégrée dans une plaque base d'une prothèse.

7. Procédé de formage selon la revendication 6, dans lequel la membrane (14) thermoplastique est en acétate d'éthyle vinyle.

8. Procédé de formage selon la revendication 6, dans lequel la deuxième feuille (17) isolante micronique est une feuille de cellophane.

9. Procédé de formage selon la revendication 6, dans lequel que la première feuille (11) isolante est ajourée pour former des opercules (12) remplis de résine jouant le rôle de cales d'enfoncement (13).

## Claims

1. A preform for a base plate of a dental prosthesis, said preform being made from composite material formed by resin, particles and fibers in the state prior to polymerization, designed to be formed on a laboratory model (10), and comprising a grid (1) formed by a meshing of weft threads (2) and warp threads (3) coated in an impregnating resin (6), the central space (8) between the meshes being exempt of fibers and resin, and determining a surface of free spaces of more than 25% of the total surface of the grid, the weft threads (2) being fixed onto the warp threads (3) at the nodes of the meshing to enable the preform to be handled and to be formed on a laboratory model without the impregnating resin (6) creeping into the mesh spaces (8), and a membrane (14) made from thermoplastic material softened after heating pressed onto the grid (1) to fill the free spaces (8) between the meshes when forming on the laboratory model (10) takes place.

2. The preform according to claim 1, wherein the weft threads (2) are maintained by knitting at equal distance from one another on the warp threads (3) and sliding thereof on the warp after forming on a laboratory model is less than their cross-section.

3. The preform according to claim 1, wherein the warp threads (3) are maintained by knitting at equal distance from one another on the weft threads (2) and sliding thereof on the weft after forming on a laboratory model is less than their cross-section.

4. The preform according to claim 1, wherein the weft threads (2) and warp threads (3) are coated by a resin gel in the state prior to polymerization, and the spaces (8) between the meshes are exempt of fibers and resin.

5. The preform according to claim 1, wherein each free space (8) is greater than or equal to the width of the weft threads (2) and warp threads (3) after forming on a laboratory model.

6. A method for forming a reinforcing grid of a dental prosthesis, comprising the following steps:
- placing a preform on a laboratory model insulated beforehand by a first insulating foil (11), said preform being constituted by a meshing of weft threads (2) and warp threads (3) coated in an impregnating resin (6) to form a grid in the state prior to polymerization,
- placing a micronic second insulating foil (17) on the grid,
- covering the micronic second insulating foil (17) by means of a thermoplastic membrane (14) that is heated and softened to be applied by pressure or negative pressure on the grid, the thermoplastic material of the membrane having crept into the spaces (8) between the meshes,
- cooling the membrane (14) to constitute a rigid support shell of the grid (1),
- photopolymerizing the grid (1) in the support shell,
- and detaching the grid (1) from the shell to be integrated in a base plate of a prosthesis.

7. The forming method according to claim 6, wherein the thermoplastic membrane (14) is made from vinyl ethyl acetate.

8. The forming method according to claim 6, wherein the micronic second insulating foil (17) is a cellophane sheet.

9. The forming method according to claim 7, wherein the first insulating foil (11) is perforated to form diaphragms (12) filled with resin acting as depression wedges (13).

## Patentansprüche

1. Vorformling für eine Grundplatte einer Dentalprothese, welcher Vorformling aus Verbundmaterial gefertigt ist, das aus Harz, Partikeln und Fasern im Vorpolymerisationszustand besteht, der dazu bestimmt ist, auf einem Labormodell (10) geformt zu werden und ein Gitter (1) umfasst, das von einem Raster aus Schussfäden (2) und Kettenfäden (3) gebildet wird, die mit einem Imprägnierharz (6) umhüllt sind, wobei der mittlere Zwischenraum (8) zwischen den Maschen frei von Fasern und Harz ist, und eine Fläche freier Zwischenräume von über 25 % der gesamten Gitteroberfläche bestimmt, wobei die Schussfäden (2) an den Kettenfäden (3) an den Knotenpunkten des Rasters befestigt sind, um die Handhabung des Vorformlings und seines Formens auf einem Labormodell zu erlauben, ohne dass das Imprägnierharz (6) in die Zwischenräume (8) der Maschen kriecht, sowie einer Membran (14) aus einem nach Erhitzen erweichten, auf das Gitter (1) gedrückten Thermoplast zum Füllen der freien Zwischenräume (8) zwischen den Maschen beim Formen auf dem Labormodell (10).

2. Vorformling nach Anspruch 1, bei dem die Schussfäden (2) durch Wirken in gleichem Abstand zueinander auf den Kettenfäden (3) gehalten werden und ihr Gleiten auf der Kette nach dem Formen auf einem Labormodell geringer als ihr Querschnitt ist.

3. Vorformling nach einem der Ansprüche 1 und 2, bei dem die Kettenfäden (3) durch Wirken in gleichem Abstand zueinander auf den Schussfäden (2) gehalten werden und ihr Gleiten auf der Kette nach dem Formen auf einem Labormodell geringer als ihr Querschnitt ist.

4. Vorformling nach Anspruch 1, bei dem die Schussfäden (2) und die Kettenfäden (3) mit einem Gelharz im Vorpolymerisationszustand umhüllt und die Zwischenräume (8) zwischen den Maschen frei von Fasern und Harz sind.

5. Vorformling nach einem der Ansprüche 1 bis 4, bei dem die Breite jedes freien Zwischenraums (8) höher oder gleich der Breite der Eigenbreite der Schussfäden (2) und Kettenfäden (3) nach dem Formen auf einem Labormodell ist.

6. Verfahren zum Formen eines Verstärkungsgitters einer Zahnprothese, das folgende Schritte umfasst:
- Anordnen eines Vorformlings auf einem Labormodell, der vorab mittels einer ersten Isolierfolie (11) isoliert wurde, welcher Vorformling von einem Raster aus Schussfäden (2) und Kettenfäden (3) gebildet wird, die mit einem Imprägnierharz (6) umhüllt sind, um ein Gitter im Vorpolymerisationszustand zu bilden,
- Anordnen einer zweiten isolierenden Mikrofolie (17) auf dem Gitter,
- Bedecken der zweiten isolierenden Mikrofolie (17) mit einer thermoplastischen Membran (14), die erhitzt und erweicht wird, um durch Druck oder Unterdruck auf das Gitter gepresst zu werden, wobei das thermoplastische Material der Membran in die Zwischenräume (8) zwischen den Maschen gekrochen ist,
- Abkühlung der Membran (14) zum Erhalt einer starren Tragschale für das Gitter (1),
- Fotopolymerisierung des Gitters (1) in der Tragschale,
- und Lösen des Gitters (1) von der Schale, damit es in eine Grundplatte einer Prothese eingearbeitet werden kann.

7. Formverfahren nach Anspruch 6, bei dem die thermoplastische Membran (14) aus Ethylvinylacetat besteht.

8. Formverfahren nach Anspruch 6, bei dem die zweite isolierende Mikrofolie (17) eine Zellophanfolie ist.

9. Formverfahren nach Anspruch 6, bei dem die erste Isolierfolie (11) durchbrochen ist, um mit Harz gefüllte Hütchen (12) zu bilden, die die Rolle von Eindrückkeilen (13) haben.
